# EUROPÄISCHE PATENTSCHRIFT

(11) **EP 0 793 687 B1**
(45) Veröffentlichungstag und Bekanntmachung des Hinweises auf die Patenterteilung: **14.10.1998**
(21) Anmeldenummer: 95939281.2
(22) Anmeldetag: 15.11.1995
(51) Int. Cl.: C08K 5/00, C08L 59/00

(54) **WITTERUNGSSTABILE POLYOXYMETHYLENFORMMASSEN**
WEATHER-RESISTANT POLYOXYMETHYLENE MOULDING COMPOUNDS
MATIERES DE MOULAGE POLYOXYMETHYLENE STABLES AUX AGENTS ATMOSPHERIQUES

(30) Priorität: 26.11.1994 DE 4442123
(43) Veröffentlichungstag der Anmeldung: 10.09.1997
(73) Patentinhaber: BASF AKTIENGESELLSCHAFT, 67056 Ludwigshafen (DE)
(72) Erfinder: KIELHORN-BAYER, Sabine, D-67133 Maxdorf (DE); EBERLE, Wolfgang, D-55124 Mainz (DE); EICHENAUER, Ulrich, D-67459 Böhl-Iggelheim (DE)
(86) Internationale Anmeldenummer: EP9504483
(87) Internationale Veröffentlichungsnummer: WO9617008

(56) Entgegenhaltungen:
- EP-A- 0 389 424
- EP-A- 0 505 203
- US-A- 4 526 921
- US-A- 5 026 750
- US-A- 5 063 263
- US-A- 5 096 951

## Beschreibung

Die Erfindung betrifft thermoplastische Formmassen, enthaltend
A) 20 bis 99,85 Gew.-% eines Polyoxymethylenhomo- oder Copolymerisates,
B) 0,05 bis 2 Gew.-% eines sterisch gehinderten Phenols der Formel I oder II oder deren Mischungen 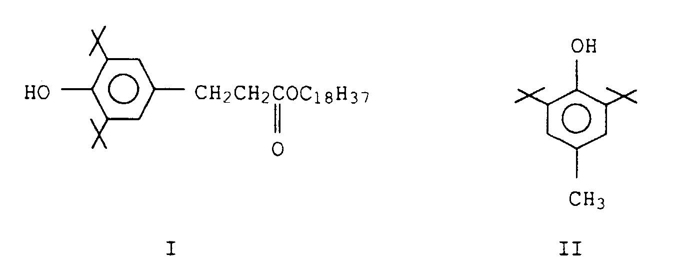
C) 0,05 bis 2 Gew.-% mindestens eines Stabilisators aus der Gruppe der Benzotriazolderivate oder Benzophenonderivate oder aromatischen Benzoatderivate,
D) 0,05 bis 2 Gew.-%, mindestens einer sterisch gehinderten Aminverbindung
E) 0 bis 75 Gew.-% übliche Zusatzstoffe und Verarbeitungshilfsmittel,
wobei die Gewichtsprozente der Komponenten A) bis E) 100 % ergeben.

Darüberhinaus betrifft die Erfindung die Verwendung derartiger Formmassen zur Herstellung von Formkörpern jeglicher Art und die so erhaltenen Formkörper.

POM Polymerisate zeichnen sich durch eine Vielzahl ausgezeichneter Eigenschaften aus, so daß sie für die unterschiedlichsten technischen Anwendungen geeignet sind.

Da dieses Polymer vielfach für sogenannte Außenanwendungen eingesetzt wird, sind aus dem Stand der Technik viele Zusätze bekannt, die eine Stabilisierung für die jeweiligen Anwendungen vorschlagen.

Nach der Lehre der EP-A 368 635 zeichnen sich POM-Formmassen, welche ein sterisch gehindertes Phenol mit Triazinfunktionalität enthalten, durch eine verbesserte UV-Stabilität aus.

Stabilisatorkombinationen aus hochmolekularen Polyalkylpiperidinen für Thermoplaste werden in der EP-A 252 877 beschrieben.

Sterisch gehinderte Amine auf Oxopiperazyl-triazinbasis werden gemäß der EP-A 448 037 zur UV-Stabilisierung von POM eingesetzt.

Aus der EP-A 171 941 sowie JP-A 60/195 155 und 63/193 950 sind Kombinationen aus sterisch gehinderten Aminen und Benzotriazolverbindungen für POM bekannt.

Für Schwarzeinfärbungen wird in der jüngeren Anmeldung DE-A 44 04 081 der Zusatz von bestimmten Rußtypen zu Benzotriazolverbindungen und sterisch gehinderten Aminen vorgeschlagen.

Aus der EP-A 586 988 ist der Zusatz von geringen Mengen Polyamid in Kombination mit Benzotriazolen und sterisch gehinderten Aminen zur UV-Stabilisierung bekannt.

Aus der EP-A 293 253, EP-A 327 714 und EP-A 289 142 sind Stabilisatorkombination bekannt, welche insbesondere der Vergilbung und/oder Verfärbung entgegenwirken. Aus der DE-A 33 15 115 ist weiterhin der Zusatz von Polypiperidinverbindungen bekannt, welche eine erhöhte Stabilität gegen Oxidation bewirken sollen.

Trotz dieser Maßnahmen besitzen bekannte Polyoxymethylenformmassen eine ungenügende Witterungsstabilität, d.h. bei Außenanwendungen wie z.B. Außengriffe am KFZ, farbigen Stoßstangen oder Innenanwendungen wie lackierte Lautsprechergitter treten Rißbildungen nach einiger Zeit auf. In Japan besteht darüberhinaus die Anforderung für einige Anwendungen, daß bis 600 h Bewitterung nach dem sogenannten Sunshinetest (83°C, ohne Tau und Beregnung, nur Hellphase) keine Rißbildung der Oberfläche bei 60facher Vergrößerung des Mikroskopes auftreten darf. In den USA gelten für derartige Innen- und Außenanwendungen ähnliche Kriterien, welche nach SAE J 1885 überprüft werden.

Die bislang bekannten stabilisierten POM-Formmassen erfüllen diese Anforderungen nicht.

Die Aufgabe der vorliegenden Erfindung bestand daher darin, die Witterungsstabilität von Polyoxymethylenformmassen zu verbessern.

Diese Aufgabe wurde durch die eingangs definierten POM-Formmassen gemäß Anspruch 1 gelöst.

Die erfindungsgemäße Stabilisatorkombination erhöht in synergistischer Weise die Witterungsstabilität des Polyoxymethylens, so daß auch für Langzeitanwendungen unter extremen Bedingungen die Rißbildung erheblich minimiert wurde.

Bevorzugte Ausführungsformen sind den Unteransprüchen zu entnehmen.

Als Komponente A) enthalten die erfindungsgemäßen Formmassen 20 bis 99,80, vorzugsweise 40 bis 99,7 Gew.-% und insbesondere 50 bis 99,5 Gew.-% eines Polyoxymethylenhomo- oder Copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH₂O- noch bis zu 50, vorzugsweise 0,1 bis 20 und insbesondere 0,3 bis 10 mol-% an wiederkehrenden Einheiten 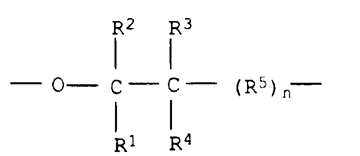 wobei R¹ bis R⁴ unabhängig voneinander ein Wasserstoffatom, eine C₁- bis C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 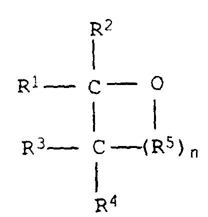 wobei R¹ bis R⁵ und n die obengenannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel 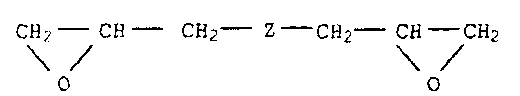 wobei Z eine chemische Bindung, -O-, ORO- (R= C₁- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 200 000, vorzugsweise von 7000 bis 150 000.

Endgruppenstabilisierte Polyoxymethylenpolymerisate, die an den Kettenenden C-C-Bindungen aufweisen, werden besonders bevorzugt.

Als Komponente B) enthalten die erfindungsgemäßen Formmassen 0,05 bis 2, vorzugsweise 0,1 bis 1 und insbesondere 0,1 bis 0,5 Gew.-% eines sterisch gehinderten Phenols der Formel I oder II oder deren Mischungen

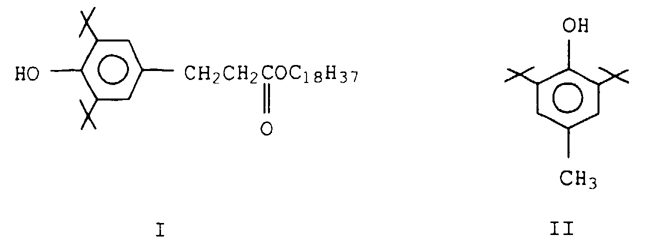

Derartige Produkte der Formel I sind im Handel erhältlich als Anox® 18 (Firma Great Lakes) oder Irganox® 1076 (Firma Ciba Geigy).

2,6-Di-tert.butyl-4-methyl-phenol (Formel II) ist im Handel erhältlich als Lowinox® BHT (Firma Great Lakes).

Die erfindungsgemäßen Formmassen enthalten als Komponente C) 0,05 - 2, vorzugsweise 0,1 - 1 und insbesondere 0,2 - 0,6 Gew.-% mindestens eines Stabilisators aus der Gruppe der Benzotriazolderivate oder Benzophenonderivate oder aromatischen Benzoatderivate.

Geeignete Benzotriazolderivate sind:
2-(2-Hydroxy-5-methylphenyl)-benzotriazol,
2-(2-Hydroxy-3,5-di-t-butylphenyl)-benzotriazol,
2-(3,5-Di-t-amyl-hydroxyphenyl)-benzotriazol,
2-(2'-Hydroxy-3',5'-diisoamylphenyl)-benzotriazol,
2-(2'-Hydroxy-4-octoxyphenyl)benzotriazol,
2-(2H)-Benzotriazol-2-yl)-4,6-bis-(1,1-dimethylpropyl)-phenol und
2-(2H-Benzotriazol-2-yl)-4-(1,1-dimethylpropyl)-6-(1-methylpropyl)-phenol.

Derartige Verbindungen sind unter der Bezeichnung Tinuvin® (eingetragenes Warenzeichen der Firma Ciba Geigy AG) im Handel erhältlich.

Bevorzugte Stabilisatoren C) sind Benzotriazolderivate der Formel III oder/und IV 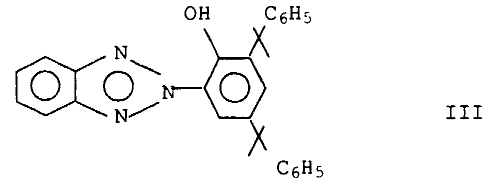 2-[2'-Hydroxy-3',5'-bis(1,1-dimethylbenzyl)phenyl]-benzotriazol ist im Handel als Tinuvin® 234 erhältlich. 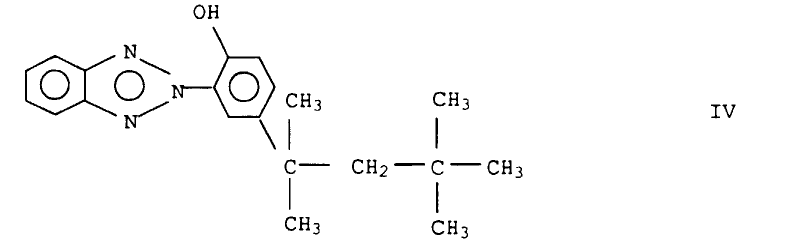 2(2H-Benzotriazol-2-yl)-2,4(tert.butyl)-phenol ist im Handel als Tinuvin® 329 erhältlich.

Bevorzugte Benzophenonderivate sind:
2,4-Dihydroxybenzophenon,
2-Hydroxy-4-methoxybenzophenon,
2-Hydroxy-4-octoxybenzophenon,
2-Hydroxy-4-dodecyloxybenzophenon,
2,2'-Dihydroxy-4-methoxybenzophenon,
2,2'-Dihydroxy-4,4'-dimethoxybenzophenon,
2-Hydroxy-4-methoxy-5-sulphobenzophenone und
2-Hydroxy-4-oxybenzylbenzophenon.

Als aromatische Benzoatderivate seien beispielhaft p-t-Butylphenylsalicylat und p-Octylphenylsalicylat genannt.

Als Komponente D) enthalten die erfindungsgemäßen Formmassen 0,05 - 2, vorzugsweise 0,1 - 1 und insbesondere 0,2 - 0,6 Gew.-% mindestens einer sterisch gehinderten Aminverbindung, vorzugsweise kommen z.B. Verbindungen der Formel 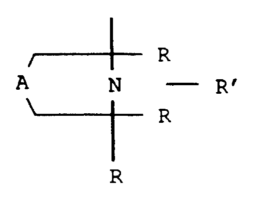 in Betracht, wobei
- R: gleiche oder verschiedene Alkylreste
- R': Wasserstoff oder einen Alkylrest und
- A': eine gegebenenfalls substituierte 2- oder 3-gliedrige Alkylenkette
bedeutet.

Bevorzugte Komponente D) sind Derivate des 2,2,6,6-Tetramethylpiperidins wie:
4-Acetoxy-2,2,6,6-tetramethylpiperidin,
4-Stearoyloxy-2,2,6,6-tetramethylpiperidin,
4-Aryloyloxy-2,2,6,6-tetramethylpiperidin,
4-Methoxy-2,2,6,6-tetramethylpiperidin,
4-Benzoyloxy-2,2,6,6-tetramethylpiperidin,
4-Cyclohexyloxy-2,2,6,6-tetramethylpiperidin,
4-Phenoxy-2,2,6,6-6-tetramethylpiperidin,
4-Benzoxy-2,2,6,6-tetramethylpiperidin,
4-(Phenylcarbamoyloxy)-2,2,6,6-tetramethylpiperidin.

Ferner sind
Bis(2,2,6,6-tetramethyl-4-piperidyl)oxalat,
Bis(2,2,6,6-tetramethyl-4-piperidyl)malonat,
Bis(2,2,6,6-tetramethyl-4-piperidyl)adipat,
Bis(1,2,2,6, 6-pentamethyl-piperidyl)sebacat,
Bis(2,2,6,6-tetramethyl-4-piperidyl)terephthalat,
1,2-bis(2,2,6,6-tetramethyl-4-piperidyloxy)ethan,
Bis(2,2,6,6-tetramethyl-4-piperidyl)hexamethylen-1,6-dicarbamat,
Bis(1-methyl-2,2,6,6-tetramethyl-4-diperidyl)adipat und
Tris(2,2,6,6-tetramethyl-4-piperidyl)benzen-1,3,5-tricarboxylat geeignet, wobei Bis(2,2,6,6-tetramethyl-4-piperidyl)sebacat 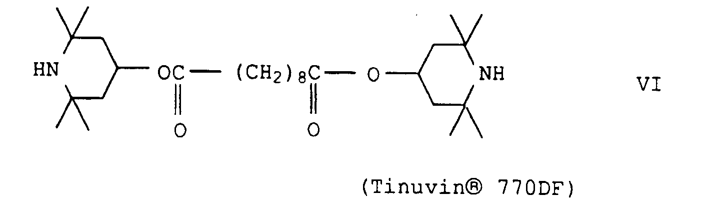
besonders bevorzugt ist.

Weiterhin besonders bevorzugt ist ein höhermolekulares Piperidinderivat: das Dimethylsuccinatpolymer mit 4-Hydroxy-2-2,6,6-tetramethyl-1-piperidinethanol

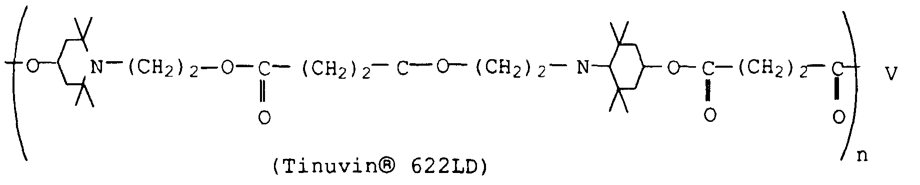

Weiterhin ist Poly-6-(1,1,3,3-tetramethylbutyl)amino-1,3,5-triazin-2,4-diyl(2,2,6,6-tetramethyl-4-piperidinyl)imino-1,6-hexandiyl(2,2,6,6-tetramethyl-14-piperidinyl)imino als Stabilisator D) geeignet.

Derartige Verbindungen sind unter der Bezeichnung Tinuvin® oder Chimasorb® (eingetragenes Warenzeichen der Firma Ciba-Geigy AG) im Handel erhältlich.

Als Komponente E) können die erfindungsgemäßen Formmassen 0 bis 75, vorzugsweise 0 bis 50 Gew.-% und insbesondere 0 bis 40 Gew.-% üblicher Zusatzstoffe und Verarbeitungshilfsmittel enthalten.

Als verstärkend wirkende Füllstoffe in Mengen bis zu 50 Gew.-%, vorzugsweise bis zu 40 Gew.-% seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 µm, insbesondere 0,1 bis 0,5 µm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Bevorzugte Kombinationen von Füllstoffen sind: Wollastonit mit Glasfasern, wobei Mischungsverhältnisse von 5:1 bis 1:5 bevorzugt sind.

Als weitere Zusatzstoffe seien, in Mengen bis zu 50, vorzugsweise 0 bis 40 Gew.-%, schlagzäh modifizierende Polymere (im folgenden auch als kautschukelastische Polymerisate, Elastomere oder Schlagzähmodifier bezeichnet) genannt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 CAtome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien-5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln VII oder VIII zum Monomerengemisch in den Kautschuk eingebaut 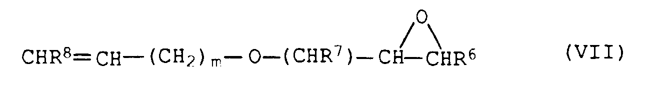 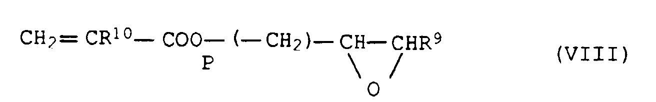 wobei R⁶ - R¹⁰ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R⁶ bis R⁸ Wasserstoff, wobei m für 0 oder 1 und g für 1 steht. Die entsprechenden Verbindungen sind Allylglycidylether und Vinylglycidylether.

Bevorzugte Verbindungen der Formel VIII sind Epoxygruppen-enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen, insbesondere 0,3 bis 20 Gew.-% Glycidylacrylat und/oder
- 0 bis 40,: insbesondere 0,1 bis 20 Gew.-% Glycidylmethacrylat, und
- 1 bis 50,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino- oder Amidgruppen sowie funktionelle Gruppen, die durch Mitverwendung von Monomeren der allgemeinen Formel 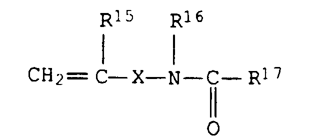 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR₁₈
- R¹⁸: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder

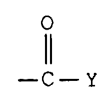

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente E) bis zu 5 Gew.-%, vorzugsweise nicht mehr als 3 Gew.-%, bezogen auf E).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere E) können auch nach anderen üblichen Verfahren, z.B. durch Suspensionspolymerisation, hergestellt werden.

Weitere bevorzugte Kautschuke sind Polyurethane, wie in den EP-A 115 846, EP-A 115 847, EP-A 116 456, EP-A 117 664 und der EP-A 327 384 beschrieben. Diese sind kommerziell unter den Bezeichnungen Elastollan® (Elastogran Polyurethane GmbH) oder Desmopan® (Bayer AG) erhältlich.

Selbstverständlich können auch Mischungen der vorstehend aufgeführten Kautschuktypen eingesetzt werden.

Die erfindungsgemäßen Formmassen können noch weitere übliche Zusatzstoffe und Verarbeitungshilfsmittel enthalten. Nur beispielhaft seien hier Zusätze zum Abfangen von Formaldehyd (Formaldehyd-Scavenger), Weichmacher, Schmiermittel, Antioxidantien, Haftvermittler, Lichtstabilisatoren und Pigmente genannt. Der Anteil solcher Zusätze liegt im allgemeinen im Bereich von 0,001 bis 5 Gew.-%. Es versteht sich von selbst, daß diese Stabilisatoren verschieden von B) bis D) sein sollen.

Als Nukleierungsmittel können die erfindungsgemäßen Formmassen gemäß einer bevorzugten Ausführungsform ein Malein-Formaldehyd-Kondensat enthalten. Geeignete Produkte werden z.B. in der DE 25 40 207 beschrieben.

Entsprechende Verbindungen sind dem Fachmann bekannt und beispielsweise in der EP-A 327 384 beschrieben.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die erfindungsgemäßen thermoplastischen Formmassen zeichnen sich durch ein ausgewogenes Eigenschaftsspektrum, insbesondere durch eine sehr hohe Witterungsstabilität aus. Demzufolge eignen sie sich zur Herstellung von Formkörpern jeglicher Art, insbesondere für Anwendungen im Automobilsektor, wie z.B. Außengriffe, Tankdeckel oder Stoßstangen.

### Beispiele

Es wurden folgende Komponenten eingesetzt:

### Komponente A)

Polyoxymethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer einen Schmelzindex von 9 g/10 min. (190°C; 2,16 kg Auflagegewicht gemäß ISO 1133).

### Komponente B)

### B/1

2,6-Di-tert.butyl-4-methyl-phenol oder
2,6-Di-tert.butyl-p-kresol oder
3,5-Di-tert.butyl-4-hydroxy-toluol

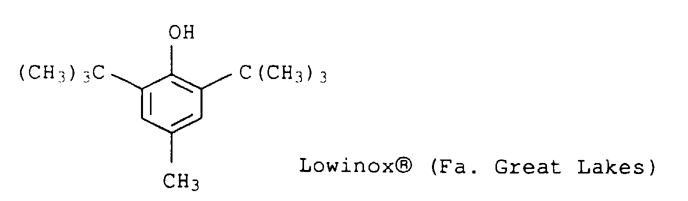

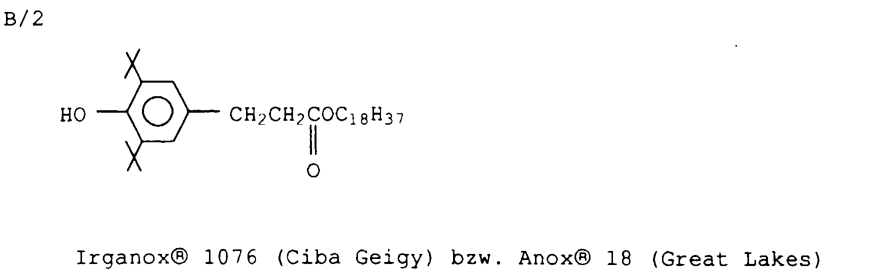

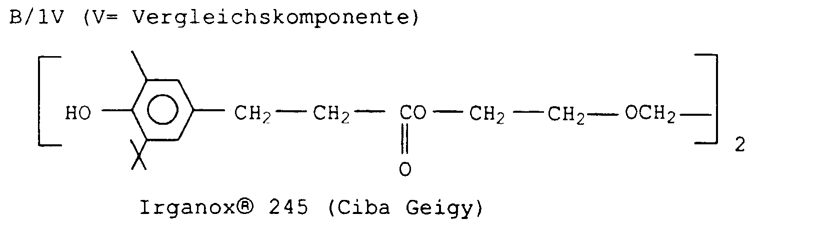

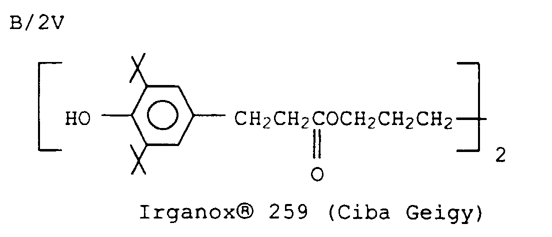

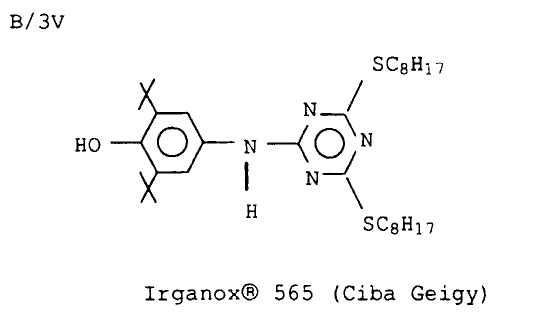

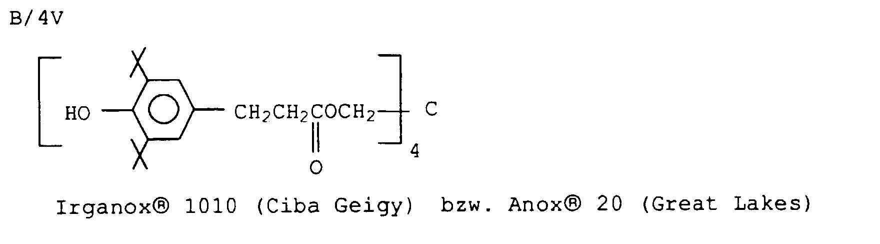

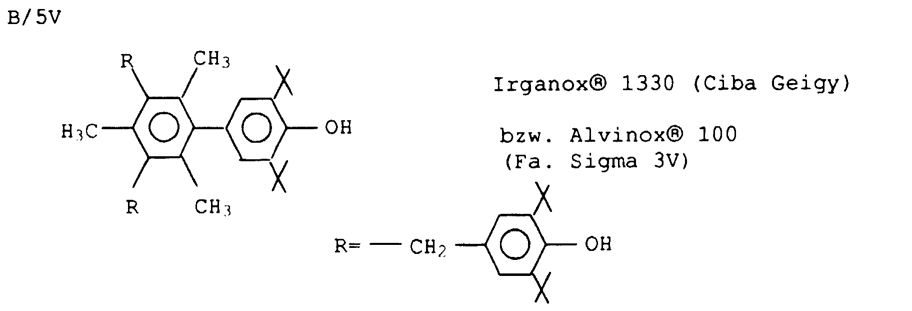

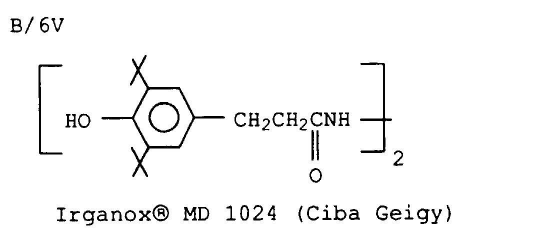

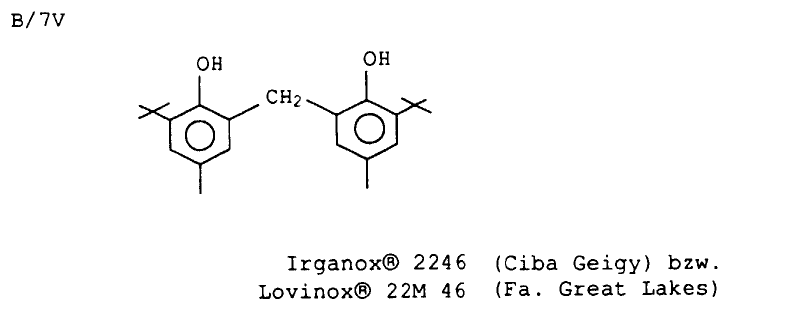

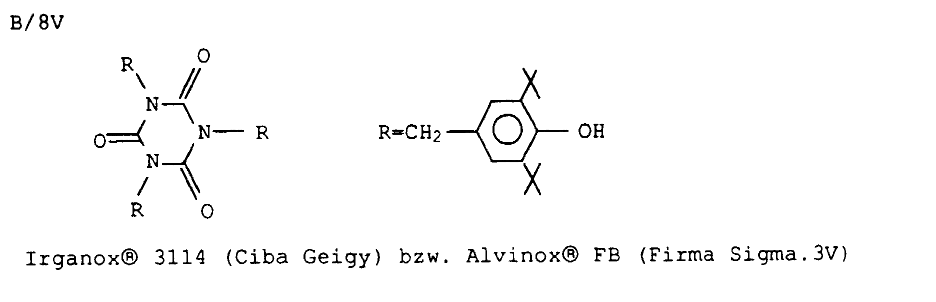

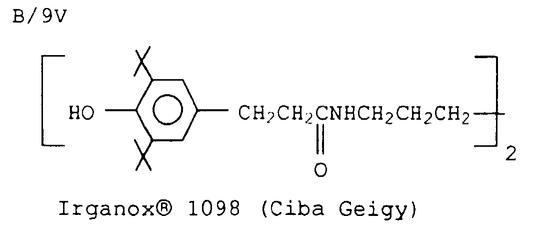

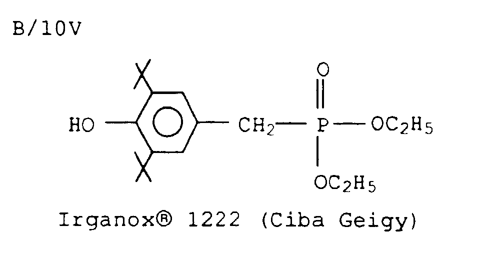

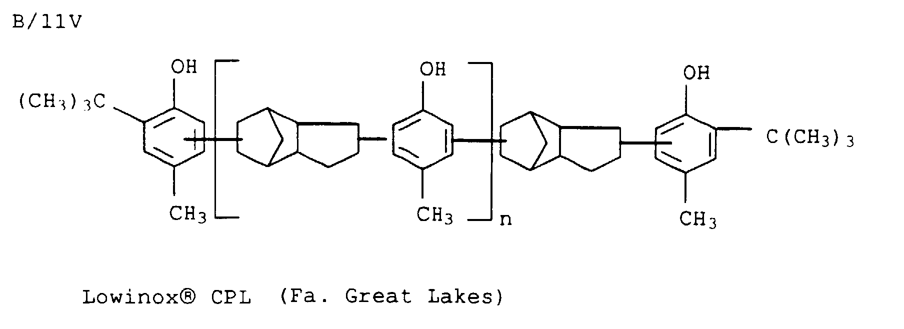

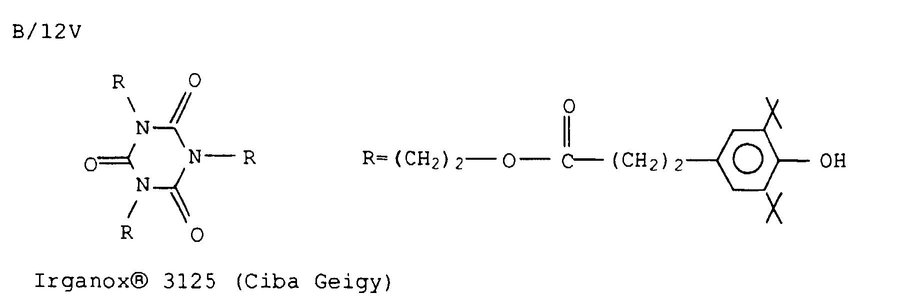

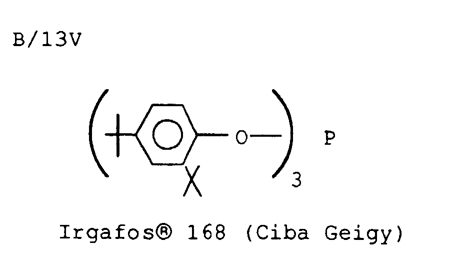

### Komponente C)

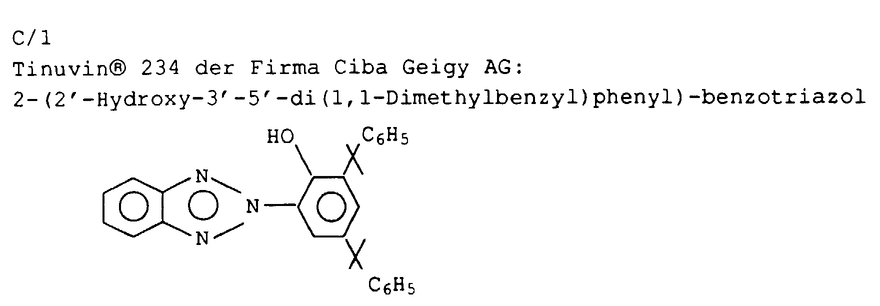

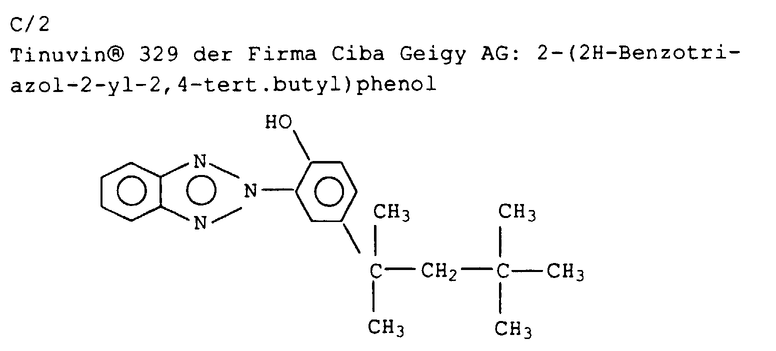

### Komponente D

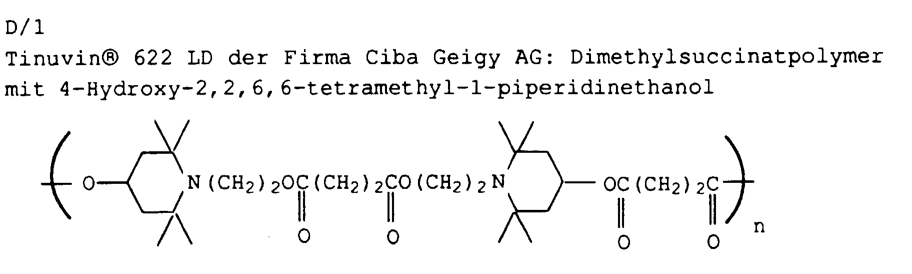

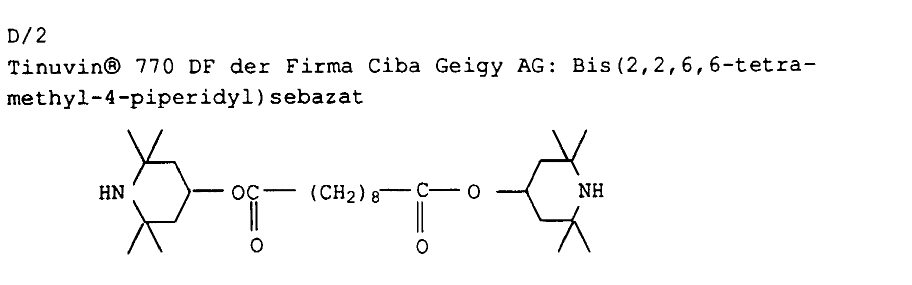

### Herstellung der Formmassen

Zur Herstellung der Formmassen wurden die Komponenten in einem Doppelschneckenextruder mit Entgasungsvorrichtung (ZSK 28 der Firma Werner & Pfleiderer) eingebracht, bei 230°C homogenisiert, entgast und das homogenisierte Gemisch durch eine Düse als Strang ausgepreßt und granuliert.

Die Witterungsstabilität wurde wie folgt bestimmt:

Bei 200°C hergestellte Spritzgußkörpern (Rundschreiben, Dicke 2 mm, Durchmesser 60 mm) wurden in einem Atlas Weather Ometer nach den Vorschriften der Society Automotive Engineers (SAE) nach J 1885 700 h bewittert. Alle 100 h während der Bewitterung wurde die Oberfläche der Rundschreiben auf Rißbildung mit Hilfe eines Lichtmikroskopes bei 60-facher Vergrößerung untersucht.

Zeichenerklärung:
- keine Risse o beginnende Rißbildung x deutliche Rißbildung

Zusammensetzung der Formmassen

**Tabelle 1:**

| | |
|---|---|
| 98,8 Gew.-% | A) |
| 0,4 Gew.-% | B) |
| 0,4 Gew.-% | C) |
| 0,4 Gew.-% | D) |

Die Ergebnisse der Messungen sind den Tabellen zu entnehmen.

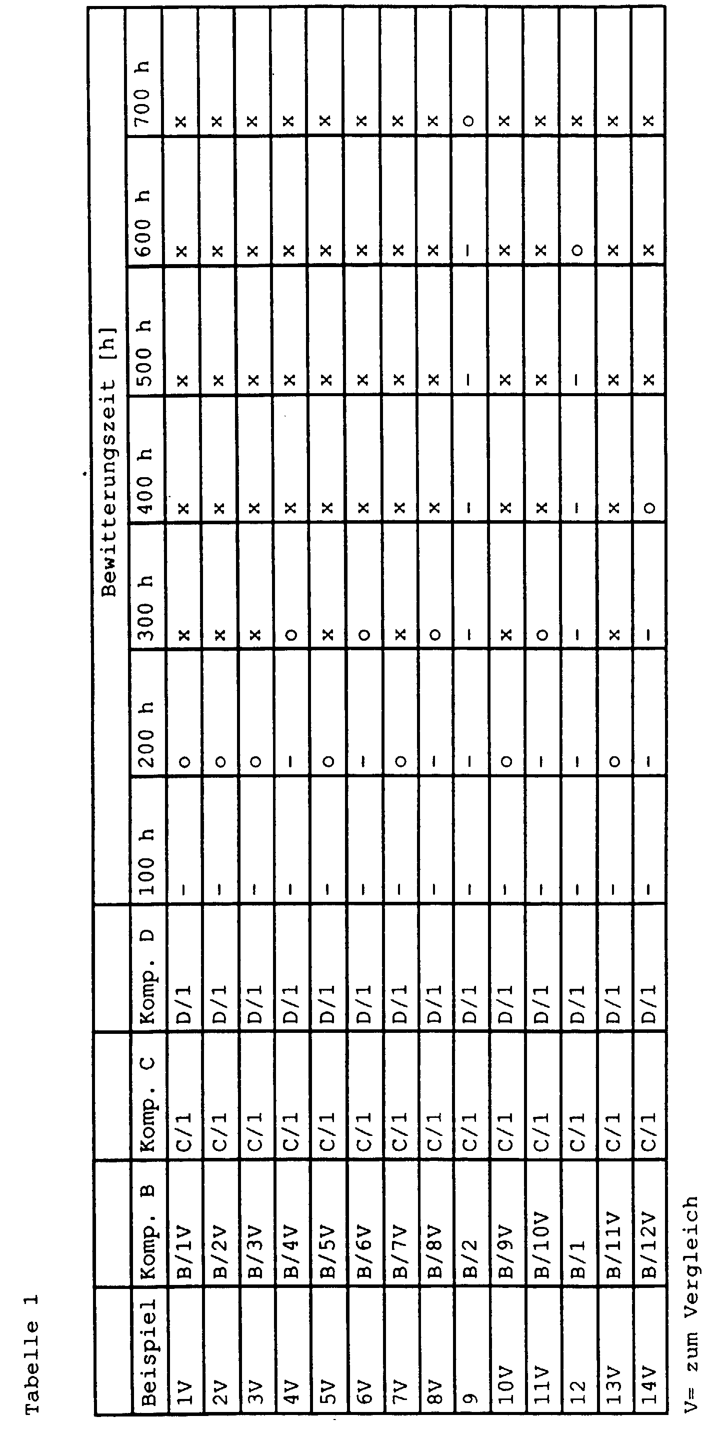

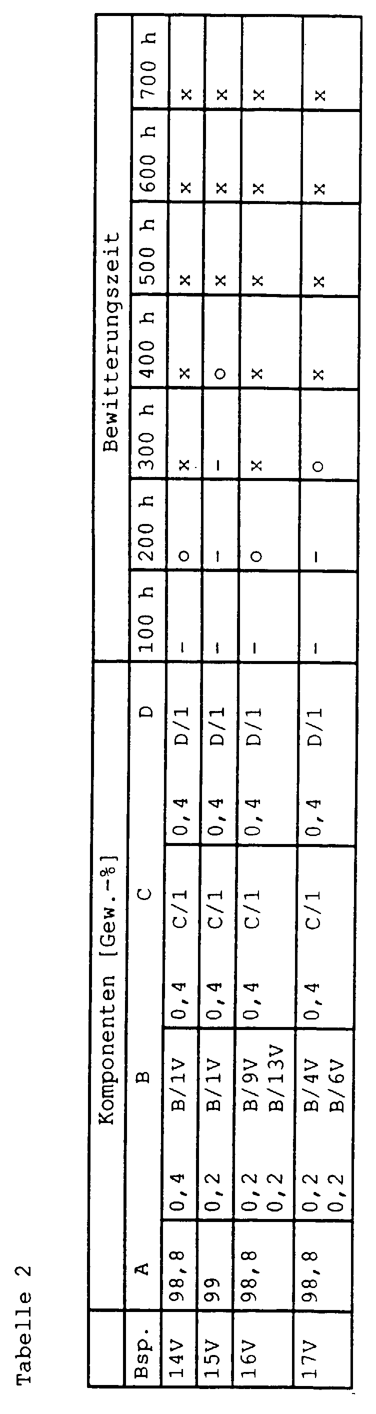

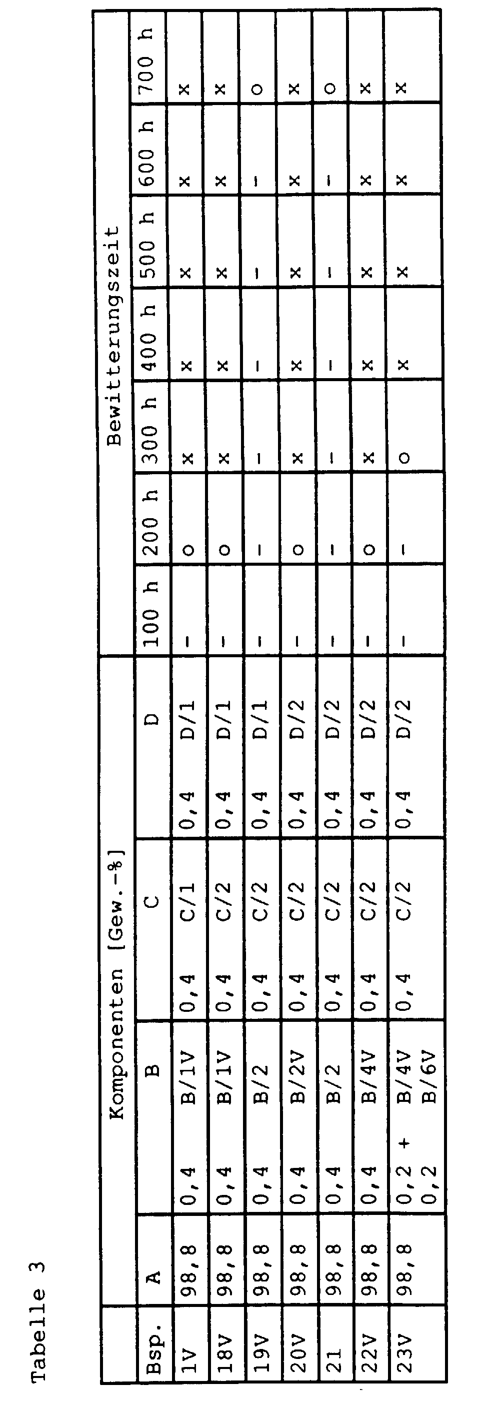

## Patentansprüche

1. Thermoplastische Formmassen, enthaltend
A) 20 bis 99,85 Gew.-% eines Polyoxymethylenhomo- oder Copolymerisates,
B) 0,05 bis 2 Gew.-% eines sterisch gehinderten Phenols der Formel I oder II oder deren Mischungen 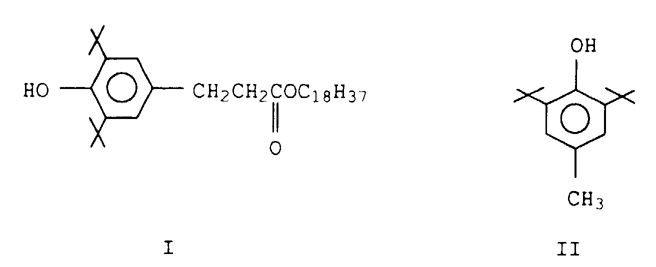
C) 0,05 bis 2 Gew.-% mindestens eines Stabilisators aus der Gruppe der Benzotriazolderivate oder Benzophenonderivate oder aromatischen Benzoatderivate,
D) 0,05 bis 2 Gew.-%, mindestens einer sterisch gehinderten Aminverbindung
E) 0 bis 75 Gew.-% übliche Zusatzstoffe und Verarbeitungshilfsmittel,
wobei die Gewichtsprozente der Komponenten A) bis E) 100 % ergeben.

2. Thermoplastische Formmassen nach Anspruch 1, enthaltend
A) 40 - 99,7 Gew.-%
B) 0,1 - 1 Gew.-%
C) 0,1 - 1 Gew.-%
D) 0,1 - 1 Gew.-%
E) 0 - 50 Gew.-%.

3. Thermoplastische Formmassen nach den Ansprüchen 1 oder 2, enthaltend als Stabilisator C) ein Benzotriazolderivat der Formel III:

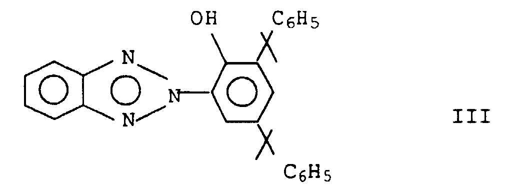

4. Thermoplastische Formmassen nach den Ansprüchen 1 bis 3 enthaltend als Stabilisator C) ein Benzotriazolderivat der Formel IV

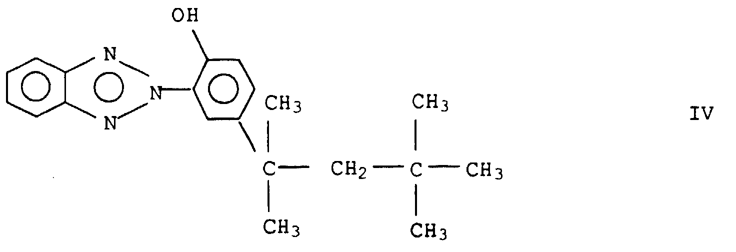

5. Thermoplastische Formmassen nach den Ansprüchen 1 bis 4, enthaltend als Komponente D) ein Derivat des 2,2,6,6-Tetramethylpiperidins.

6. Thermoplastische Formmassen nach Anspruch 6, in denen die Komponente D) ein Piperidinderivat der Formel VI 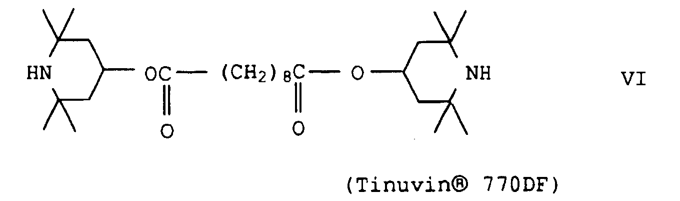 oder ein Dimethylsuccinatpolymer mit 4-Hydroxy-2,2,6,6-tetramethyl-1-piperidinethanol oder deren Mischungen ist.

7. Verwendung der thermoplastischen Formmassen gemäß den Ansprüchen 1 bis 6 zur Herstellung von Fasern, Folien und Formkörpern.

8. Formkörper, erhältlich aus den thermoplastischen Formmassen gemäß den Ansprüchen 1 bis 6.

## Claims

1. A thermoplastic molding composition comprising
A) from 20 to 99.85% by weight of a polyoxymethylene homo- or copolymer,
B) from 0.05 to 2% by weight of a sterically hindered phenol of the formula I or II or mixtures of these 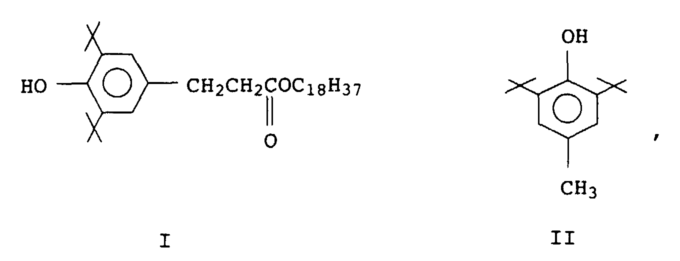
C) from 0.05 to 2% by weight of at least one stabilizer selected from the group consisting of benzotriazole derivatives, benzophenone derivatives and aromatic benzoate derivatives,
D) from 0.05 to 2% by weight of at least one sterically hindered amine compound,
E) from 0 to 75% by weight of conventional additives and processing aids,
where the sum of the percentages by weight of components A) to E) is 100%.

2. A thermoplastic molding composition as claimed in claim 1, comprising
A) from 40 to 99.7% by weight
B) from 0.1 to 1% by weight
C) from 0.1 to 1% by weight
D) from 0.1 to 1% by weight
E) from 0 to 50% by weight.

3. A thermoplastic molding composition as claimed in claim 1 or 2, which includes, as stabilizer C), a benzotriazole derivative of the formula III:

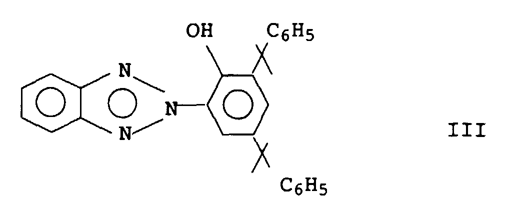

4. A thermoplastic molding composition as claimed in any of claims 1 to 3, which includes, as stabilizer C), a benzotriazole derivative of the formula IV

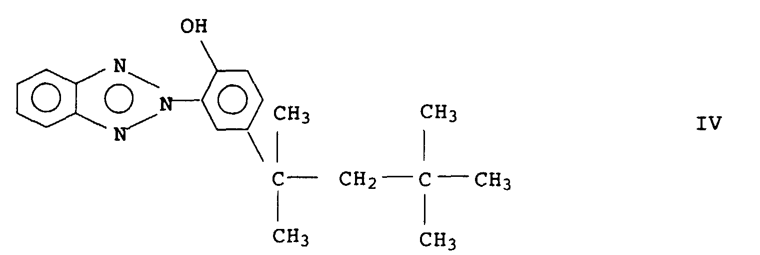

5. A thermoplastic molding composition as claimed in any of claims 1 to 4, which includes, as component D), a derivative of 2,2,6,6-tetramethylpiperidine.

6. A thermoplastic molding composition as claimed in claim 6, in which component D) is a piperidine derivative of the formula VI 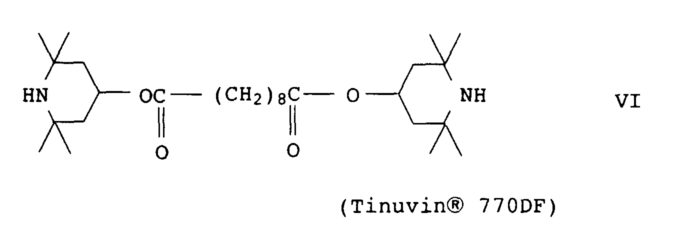 or a dimethylsuccinate polymer with 4-hydroxy-2,2,6,6-tetramethyl-1-piperidinylethanol or mixtures of these.

7. The use of a thermoplastic molding composition as claimed in any of claims 1 to 6 for producing fibers, films and shaped articles.

8. A shaped article obtainable from the thermoplastic molding composition as claimed in any of claims 1 to 6.

## Revendications

1. Masses à mouler thermoplastiques contenant
A) 20-99,85% en poids d'un homo- ou copolymère de polyoxyméthylène,
B) 0,05-2% en poids d'un phénol encombré stériquement de formule I ou II ou de leurs mélanges 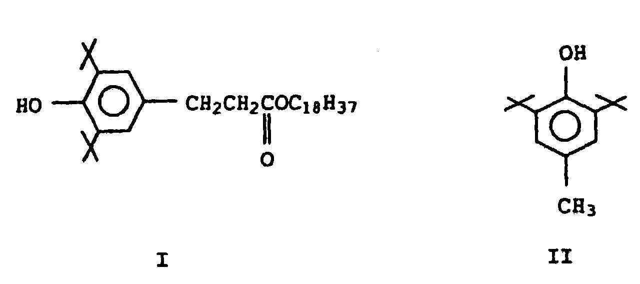
C) 0,05-2% en poids d'au moins un stabilisant du groupe des dérivés du benzotriazole ou des dérivés de la benzophénone ou des dérivés aromatiques benzoate,
D) 0,05-2% en poids d'au moins un composé amine encombré stériquement
E) 0-75% en poids d'additifs et d'adjuvants usuels
les pourcentages en poids des composants A) à E) donnant 100%.

2. Masses à mouler thermoplastiques selon la revendication 1 contenant
A) 40-99,7% en poids
B) 0,1-1% en poids
C) 0,1-1% en poids
D 0,1-1% en poids
E 0-50% en poids.

3. Masses à mouler thermoplastiques selon la revendication 1 ou 2 contenant comme stabilisant C) un dérivé du benzotriazole de formule III

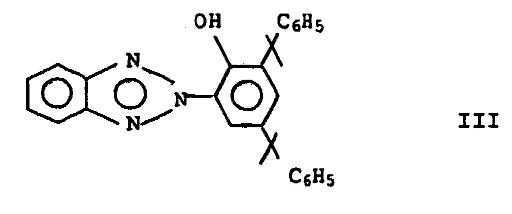

4. Masses à mouler thermoplastiques selon l'une quelconque des revendications 1 à 3 contenant comme stabilisant C) un dérivé du benzotriazole de formule IV

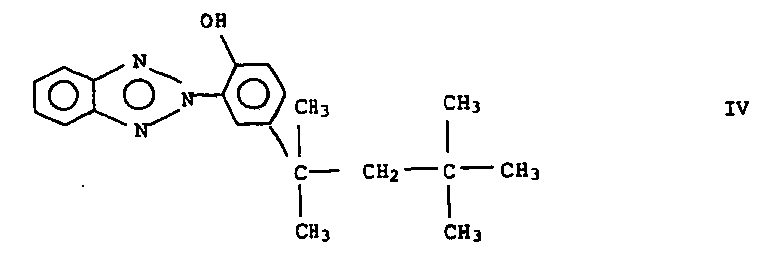

5. Masses à mouler thermoplastiques selon l'une quelconque des revendications 1 à 4 contenant comme composant D) un dérivé de la 2,2,6,6-tétraméthylpipéridine.

6. Masses à mouler thermoplastiques selon la revendication 5 dans lesquelles le composant D) est un dérivé de la pipéridine de formule VI 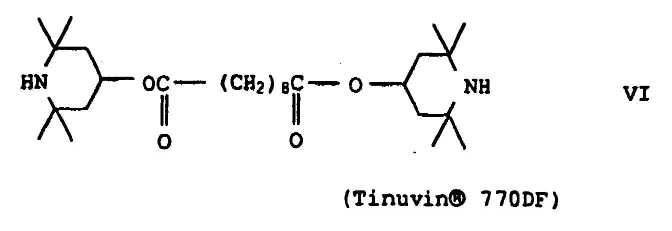 ou un polymère de succinate du diméthyle avec du 4-hydroxy-2,2,6,6-tétraméthyl-1-pipéridine-éthanol ou leurs mélanges.

7. Utilisation de masses à mouler thermoplastiques selon l'une quelconque des revendications 1 à 6 pour la fabrication de fibres, de feuilles et de corps moulés.

8. Corps moulés obtenus à partir de masses à mouler thermoplastiques selon l'une quelconque des revendications 1 à 6.
